# EUROPEAN PATENT APPLICATION

(11) **EP 1 298 937 A1**
(43) Date of publication of application: **02.04.2003**
(21) Application number: 01123064.6
(22) Date of filing: 26.09.2001
(51) Int. Cl.: H04N 7/50

(54) **Video encoding or decoding using recompression of reference frames**

(71) Applicant: Sung, Chih-Ta Star, 85625 Glonn (DE)
(72) Inventor: Sung, Chih-Ta Star, 85625 Glonn (DE); Cheng, Joanne Chowen, 85625 Glonn (DE)
(74) Representative: Grünecker, Kinkeldey, Stockmair & Schwanhäusser Anwaltssozietät

(57) **Abstract**

This invention is concerned with video encoding or decoding using reference frame compression. According to the invention, a frame buffer compression/decompression circuit is coupled between a video encoder or decoder and a frame buffer storage device. Reference frames output from the video encoder or decoder are compressed and then stored in the storage device. Reference frames needed for the encoding or decoding are taken from the storage device, decompressed in the compression/decompression circuit and transmitted to the video encoder or decoder.

## Description

### Field of invention

This invention relates generally to digital signal encoding or decoding, and particularly, to methods and circuits for video encoding or decoding using compressed reference frames.

### Background of the invention

The ISO Moving Picture Experts Group (MPEG), has developed both digital audio and video compression algorithms that can compress entertainment, media or educational videos for storage or transmission on various digital media, including compact disk (CD), digital versatile disk (DVD), video on demand (VOD), cable television (CATV), high resolution television (HDTV), remote video database, etc.

Most digital video compression algorithms achieve compression in three stages: bandwidth reduction, adapted lossy compression and a final stage of lossless compression. The compression stage for bandwidth reduction consists primarily of matching the source resolution to the target bit-rate by reducing the chrominance resolution to a satisfactory ratio. Removing the spatial and temporal redundancy by waveform analysis and subjectively adapting the quantization, forms the second stage of compression. The third stage, a lossless compression, maps the resulting information into a data bitstream by means of statistical entropy coding with variable length codes (VLC). The MPEG video compression takes three basic techniques: block based motion compensation for the reduction of the temporal redundancy, transform domain based compression for the reduction of spatial redundancy, and a variable length coding technique. Temporal prediction techniques with motion compensation are used to exploit the strong temporal correlation of video signals. Temporal prediction is applied with both pure predictive coding and interpolative coding. The remaining signal, the predictive error, is further compressed with spatial redundancy reduction techniques, using a compression of 8x8 blocks of picture elements (pels, pixels).

A video sequence is simply a series of pictures taken at closely spaced intervals in time. Except for the special case of a scene change, these pictures or frames tend to be quite similar from one to the next. Accordingly, the MPEG video compression system takes advantage of this similarity or predictability from one picture to the next in a sequence. Compression techniques that use information from other frames in the sequence - that are thus used as reference frames - are generally called "interframe" techniques. When a scene change occurs, interframe compression does not work and the compression technique should be changed. In this case, the compression model should be structured to take advantage of the similarity of a given region of a picture to adjacent areas in the same picture. This type of compression technique that uses only information from a single picture is usually called "intraframe" technique. These two compression techniques, interframe and intraframe, are the heart of the MPEG video compression algorithm.

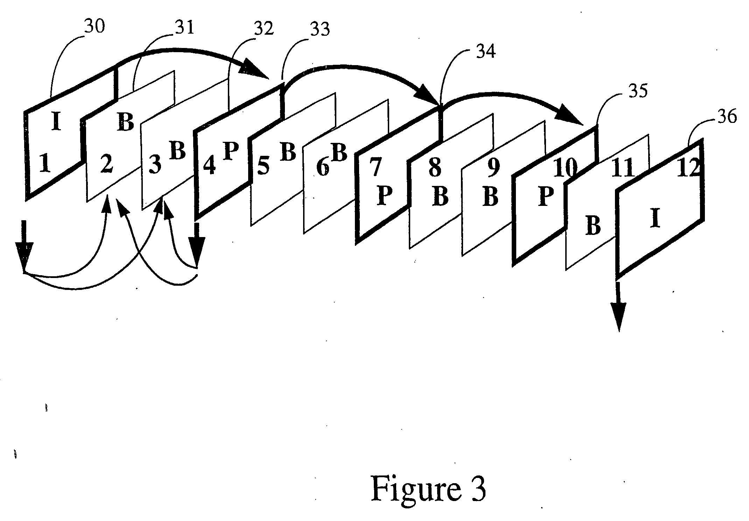

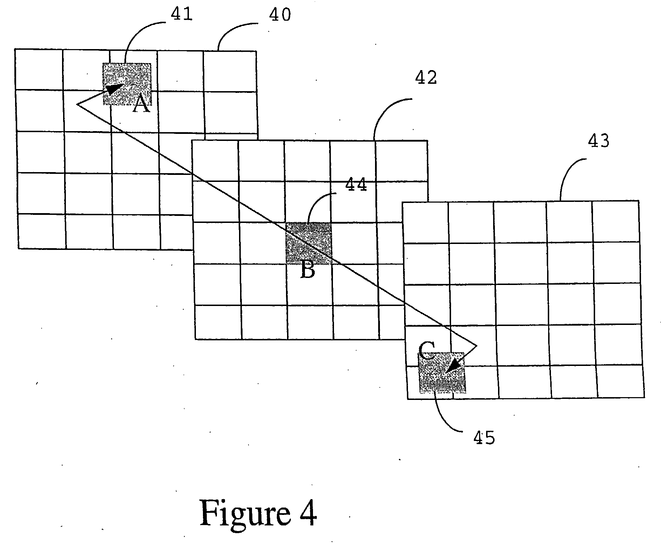

Each video sequence is divided into one or more groups of pictures (GOP). Each group of pictures is composed of one or more pictures of three different types of frames: **I-frame,** an intra-coded frame, **P-frame,** a predictive frame using a previous frame as its reference and **B-frame**, a bi-directional frame which is predicted by either one or both past reference frame and future reference frame. A typical group of pictures in display order is shown in Figure 3. Frame 30 is the first frame of this GOP and also an I-frame which is used as a reference frame by a P-frame 33 and two other bi-directional frames, B-frame 31 and B-frame 32. The P-frame 33 is coded by using the I-frame 30 as its reference and is used as a reference by the next predictive frame, P-frame 34, and two other bi-directional frames, B-frame 31 and B-frame 32. This example of a GOP is composed of an I-frame, three P-frames and seven B-frames. Followed by this GOP is another GOP started by an I-frame 36. If there is motion in the sequence, the coding of a P-frame and a B-frame is dependent on a technique called "motion compensation". A better prediction in motion compensation is often obtained by encoding differences relative to areas that are shifted with respect to the area being encoded. The process of determining the motion vectors in the encoders is called "motion estimation". The motion vectors describing the motion direction and difference of motion of the macroblocks are transmitted to the decoder as part of the reconstruction bitstream. An example of motion compensation is sketched in Figure 4. A motion estimation engine should search a certain region to determine the best matching for block 41 in the past frame 40 and the best matching for block 45 in the future frame 43. After finding the best matching macroblock, it starts coding the motion vector and corresponding vertical and horizontal displacements as shown for forward and backward motion compensation. The motion vectors are the same for each pel in the same macroblock.

MPEG decoders merely follow the directions encoded in the bitstream and are thus relatively simple and easy to implement. On the other hand, MPEG encoders are much more complex and intelligent. They must identify the motion area, search for the best match macroblocks, optimize the motion vectors, decide whether to use intra- or interframe coding, carry out the discrete cosine transform (DCT), quantization and entropy coding, determine the quantization table, control the bit rate, control the data buffering to prevent the occurrence of underflow and overflow, determine when a given block can be simply repeated, and vary all of these parameters and decisions efficiently to maximize quality for a certain bit rate.

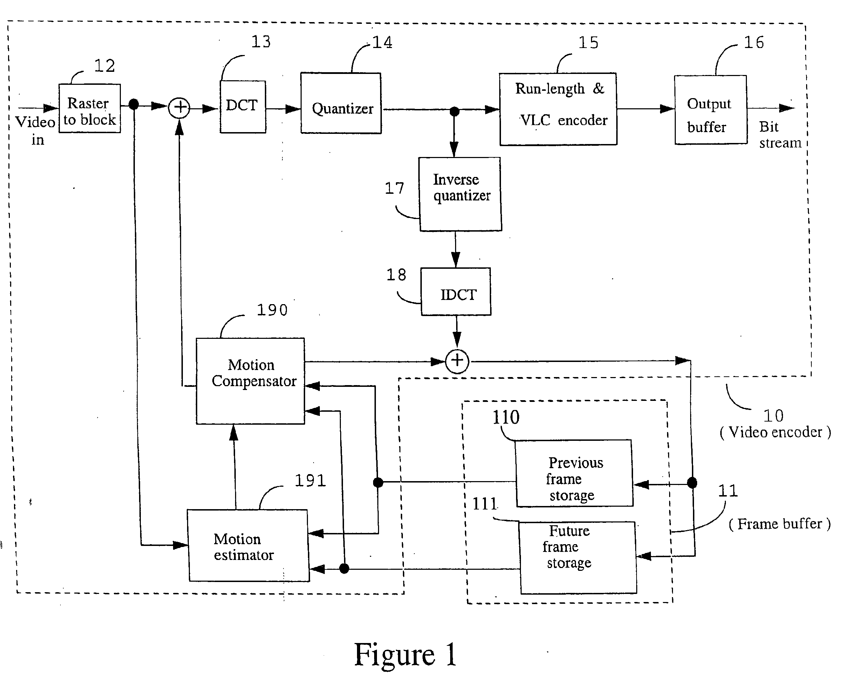

Figure 1 shows a block diagram of a common method for video encoding. The DCT-based MPEG encoder 10 begins the compression process by partitioning the input image into non-overlapping 8x8 blocks of pels through a raster to block circuit 12. After level-shifting the 8-bit samples so that they range from -128 to + 127, the time domain blocks are transformed to the frequency domain using the forward DCT 13.

The DCT circuit 13 concentrates most of the energy of the sample blocks into a few coefficients, usually in the top-left corner of the DCT block. The coefficient in the immediate top-left corner is called the DC coefficient because it is proportional to the average intensity of the block of spatial domain samples. The remaining (AC) coefficients correspond to increasingly higher frequencies of the sample block. Quantization is a key to most of the video compression algorithms. An 8x8 matrix is used to reduce the amplitude of the DCT coefficient, and on the other hand, to increase the number of zero-value coefficients. The quantizer circuit 14 performs the quantization step and determines the quantization matrix according to the constraints of quantization. A zig-zag scanning sequence takes the quantized coefficients starting from the top-left DC corner and packs them into a bitstream which will have long runs of zeroes. Only the non-zero AC coefficients are entropy coded with variable length codes (VLC). An entropy coding compresses a series of input symbols by assigning short codes to represent the more frequently occurring symbols and assigning longer codes to improbable symbols. The circuit 15 works for zig-zag scanning and run-length packing as well as a VLC encoder.

The compressed signal is now ready for storage or transmitting out and is stored in output buffer 16. The video compression comes mostly from the quantization and the VLC coding. The inverse quantizer 17 and the inverse DCT 18 reversely decode just compressed blocks of pels. Together with the motion compensator 190, they reconstruct complete frames and store them into stand-alone storage devices called frame buffer 11 as previous frame 110 and future frame 111 for usage as reference frames for the coding of a P-frame or a B-frame. The motion estimator 191 accesses the off-chip frame buffer for correlation calculations and searches for a best match macroblock in the previous frame or future frame. The motion compensator 190 also needs to access the frame buffer frequently for the determination of the motion vectors and macroblock differences among frames.

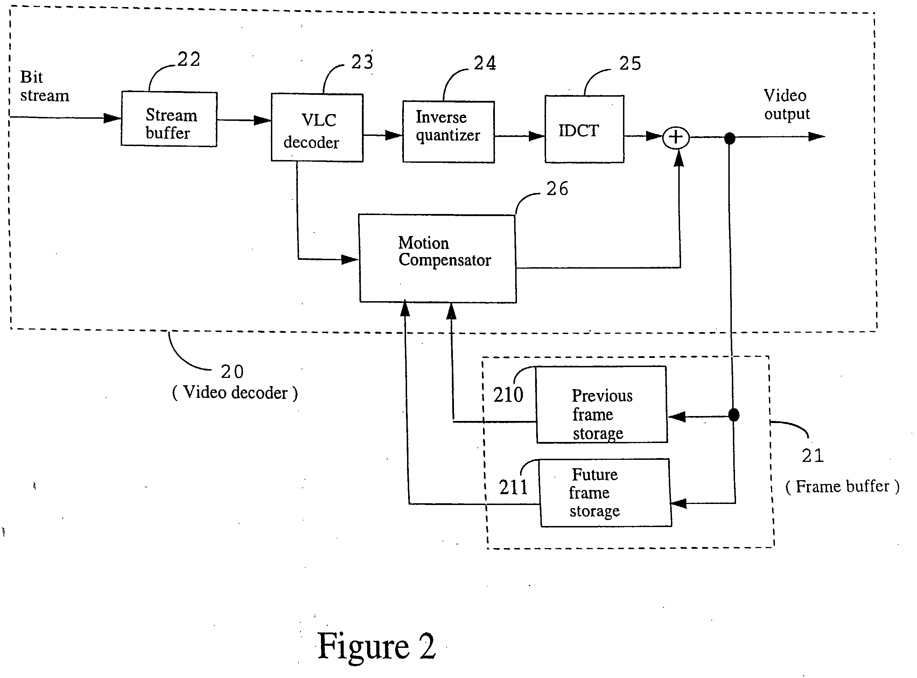

Figure 2 shows the video decoder 20 and a frame buffer 21. Since the MPEG video decoder merely follows the directions encoded in the bitstream, the decoding process is very straightforward. A bitstream buffer 22 takes the coming compressed video bitstream and feeds it to the VLC decoder 23 which recovers the patterns of the DCT coefficients. The inverse quantizer 24 and the inverse DCT 25 reconstruct the blocks of pels. In the case of decoding a P-frame or a B-frame, the motion compensator 26 accesses the frame buffer 21 containing a previous frame storage 210 and an future frame storage 211 for compensating and reconstructing a video frame.

The prior art has several drawbacks. In the case of the MPEG-2 Main Profile Level encoding or decoding, a 16 megabit (2 Megabyte) memory is required to store two reference video frames, system buffer, audio buffer and a temporary buffer for the frame being compressed/decompressed. All known MPEG encoding or decoding system use stand-alone dynamic random access memories, DRAMs, as frame buffer storage devices. First of all, the price of the required 16 Mbit DRAM frame buffer and the cost of implementing a video encoder or decoder is high. The 16 Mbit DRAM frame buffer also uses a large area in the system layout. The data transfer between a video encoder or decoder and stand alone DRAMs frame buffer consumes a large amount of power. Furthermore, it suffers a long delay time which is caused by the significant larger chip to chip load capacitance due to the IO pad of a chip, pin to pin printed circuit board, and the PCB interconnecting load capacitance.

The problem underlying this invention is to provide a method and a system for encoding or decoding video data requiring reduced hardware and lower power consumption.

### Description of the invention

This problem is solved by the video encoding or decoding method of claim 1 and by the video encoding or decoding system of claim 12.

A method for encoding and decoding video data consisting of a sequence of frames is considered where the single frames can be encoded using reference frames either by interframe- or by intraframe-technique. According to the invention, the reference frames are split into one or several blocks of pixels. These blocks or parts of them are compressed before storage and again decompressed before use as reference. By compressing the blocks the amount of data is decreased. Therefore, the size of required storage devices can be reduced significantly.

The compression rate can be increased by compressing not the values of the pixels themselves but by compressing the difference between the values of adjacent pixels starting from a predetermined reference or starting pixel. In an analogous way, the pixels are recovered using these difference values and the value of the reference pixel.

Preferably, the blocks are scanned line by line, row by row or along a spiral-type sequence starting from the reference pixel to obtain these difference values.

Advantageously, the at least partial compressing produces a bitstream for each block comprising a code representing the starting pixel, a code indicating what kind of compression was used, a code representing said difference values between adjacent pixels up to the last non-zero difference value and a code indicating the last non-zero difference value of the block. The remaining difference values are redundant. In this way, all information necessary for decoding is included in the bitstream.

It is more convenient for pixel data accessing if each bitstream has the same bit length. Thus, it is preferable to further insert a dummy code to fill up the bitstream to a predetermined bit length.

It is advantageous to perform the partial compression using entropy coding. This entropy coding does not necessarily consist of a single method but can comprise a coupling of different entropy coding methods such as Huffman, run-length, LZW etc.

The entropy coding preferably comprises a variable length Huffman of Huffman-like coding. Here, a series of input symbols, e.g. the difference values of adjacent pixels, is compressed by assigning short codes to frequently occuring symbols and longer codes to improbable symbols.

To reduce the overhead, it is advantageous to use the variable length Huffman coding only for a first predetermined number of symbols, for example, only for symbols with a probability above a predetermined threshold. Preferably, a second predetermined number (which might be zero) of the remaining symbols is encoded directly with a fixed length Huffman coding. To further reduce the overhead, no Huffman coding is carried out on the rest of the symbols.

Preferably, the entropy coding comprises a run-length coding. If the pel values are changing a lot, the run-length coding will probably not result in a higher compression. It is therefore advantageous to decide during the entropy coding, e.g. by counting the number of pel value repetitions, whether to use the run-length coding for the corresponding block or not. All pels within the block are then run through the same compression process.

The present invention also provides a video encoding or decoding system comprising a frame buffer compression/decompression circuit coupled between a video encoder or decoder and a frame buffer storage device. The frame buffer compressor/decompressor acts like a bridge between the video encoder or decoder and the frame buffer. The frame buffer compressor/decompressor circuit compresses a video frame output from a video encoder or decoder and stores the compressed frame data into local storage devices. When the video encoder or decoder needs blocks of a video frame, the frame buffer compressor/decompressor accesses the frame buffer for the compressed frames (in the following also referred to as compressed frame buffer), reconstructs the corresponding blocks of the video frame and passes them to the video encoder or decoder.

The frame buffer compression/decompression circuit preferably comprises an in/out buffer to store incoming/outgoing bitstreams, an entropy codec circuit, a frame buffer controller controlling the data flow in/out the frame buffer storage device and a block starting address generator. The latter is implemented to generate the address of a starting pel of a block of pels. This is needed because after compression, the length of each block of pels is variabel and it is very difficult and time consuming to recover a block of pels without knowing where to obtain the start of it. The frame buffer compression/decompression circuit further comprises a control state machine for controlling the global data flow and the pipelining.

It is advantageous, to include a further buffer connected between the in/out buffer and the entropy codec circuit. This buffer serves as temporary buffer for the entropy codec circuit and avoids that the in/out buffer is used for that.

Preferably, the entropy codec circuit comprises a Huffman of Huffman-like variable length codec circuit. Alternatively or additionally, the entropy codec circuit comprises a run-length codec circuit. In this case, it is an advantage to include a compression rate calculator into the entropy codec circuit. This compression rate calculator counts the bit numbers of each block and decides whether to skip the run-length coding or not. If the pel information is changing a lot, the run-length coding does not necessarily increase the compression rate.

In order to increase the compression rate, the difference values of adjacent pixels are compressed. To achieve this, the frame buffer compression/decompression circuit comprises a pixel register and an adder/subtractor circuit. The adder/subtractor circuit calculates the difference value of a pixel stored in the pixel register and an adjacent pixel and recovers a pixel by adding the corresponding difference value to an adjacent reference pixel.

For saving area, the pixel adder/subtractor circuit is implemented by a full adder that is coupled with converting logic gates to also function as a subtractor.

Preferably, the frame buffer compression/decompression circuit further comprises buffers for storing blocks of recovered pels. In this way, at the same time, the in/out buffer can be used for an incoming bitstream.

Since a video encoder or decoder also needs block buffers for the motion estimation and motion compensation, the video encoder or decoder and the frame buffer compression/decompression circuit preferably share some of the block buffers. If the frame buffer compression/decompression circuit contains a sufficient number of storage devices, they can be omitted in the video encoder or decoder and vice versa.

It is advantageous to implement the buffers by standard DRAM or SRAM memory cells with a synchronized clock controlling the in/out of the pixel data flow.

Preferably, the whole video encoding or decoding system is implemented as a system-on-a-chip. The video encoder or decoder is integrated together with the frame buffer compression/decompression circuit and the frame buffer storage device. It is advantageous to implement the system-on-a-chip using a DRAM or a standard ASIC process. In the case of choosing the DRAM process to implement the video encoding or decoding system, the compressed frame data can be stored by standard DRAM memory cells and the resulting saving of a large area can be used to deploy the complex video encoding or decoding circuit. If an ASIC process is chosen to implement the video encoding or decoding system, standard DRAM or SRAM cells can be used to implement the frame buffer compression/decompression circuit and be integrated with the video encoding or decoding circuit and the frame buffer storage devices onto a single chip.

In this way, the number of storage devices is minimized which makes the implementation of the system-on-a-chip video encoding or decoding system very affordable and boosts the system performance by getting rid of the long pin to pin delay time in data transfer. This also eliminates most of the power consumption coming from the data transfer between the video encoder or decoder chip and the off-chip frame buffer memories in a conventional design.

### BRIEF DESCRIPTION OF THE DRAWINGS

Figure 1 is a block diagram of a prior art video encoding system including a video encoder and an off-chip frame buffer memory.

Figure 2 is a block diagram of a prior art video decoding system including a video decoder and an off-chip frame buffer memory.

Figure 3 illustrates a group of pictures (GOP) and the sequence of reconstructing video frames.

Figure 4 shows the way of searching for the best matching macroblock and the method of motion compensation.

Figure 5 shows a system-on-a-chip video encoding or decoding system with a frame buffer compressor/decompressor as a bridge coupled between a video encoder or decoder and a compressed frame buffer memory.

Figure 6 is a block diagram of a frame buffer compressor/decompressor circuit.

Figure 7 is an example of a bitstream of a compressed block of pels.

Figure 8 illustrates a sequence for obtaining the difference between adjacent pels within a block of pels.

Figure 9 shows examples of possible difference values of adjacent pels and their assigned VLC codes.

### Detailed description of preferred embodiments

In the following, the method for encoding or decoding video data using compressed reference frames is described in more detail along the lines of preferred embodiments of corresponding video encoding or decoding systems.

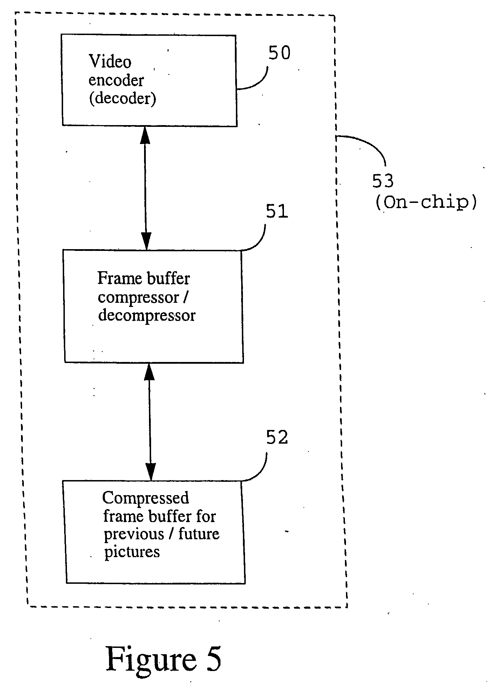

A preferred embodiment of a video encoding or decoding system integrated on a chip 53 is illustrated in Figure 5. A frame buffer compressor/decompressor 51 is coupled between a video encoder or decoder 50 and a compressed frame buffer 52.

In the following embodiments, the frames are split into 8x8 blocks and 16x16 macroblocks as used in MPEG coding. It is to be understood that the invention is not limited to this example. The blocks can be of arbitrary shape and size, in particular *m×n* blocks; with arbitrary *m* and *n*.

Using a DRAM process in implementing the entire video encoder or decoder system, the frame buffer compression can result in a large area saving, very possibly greater than 80% of the die. In another case of using a standard CMOS application specific integrated circuit, the ASIC process, to implement the entire system-on-a-chip for the video encoding or decoding, the compressed frame buffer and other 8x8 blocks and 16x16 macroblocks can be implemented by standard CMOS storage devices like SRAMs.

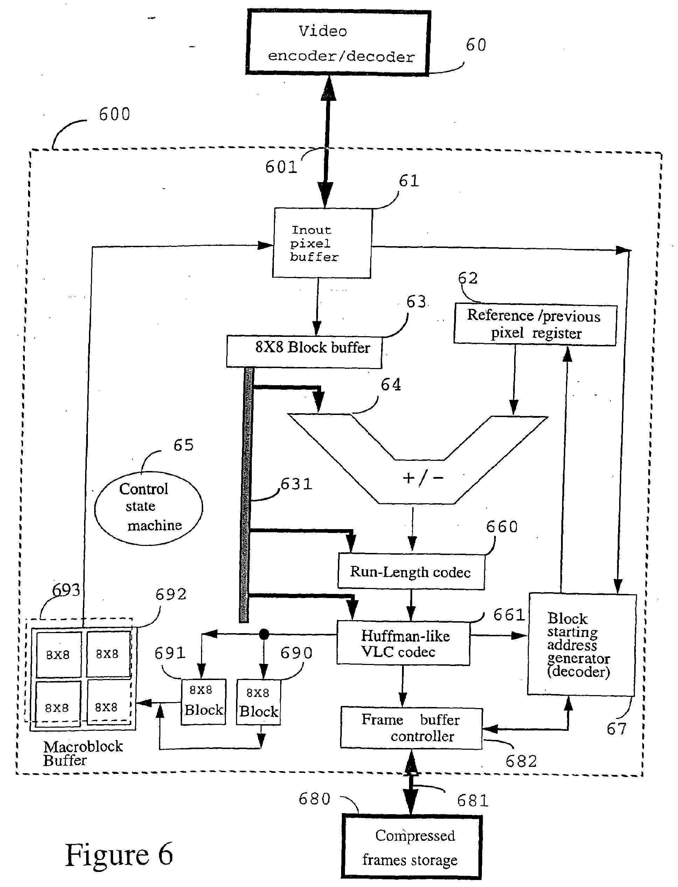

In Figure 6, a preferred embodiment of a frame buffer compressor/decompressor is depicted. A compression/decompression circuit 600 receives and transmits video data from/to a video encoder or decoder 60 over a 16-bit wide data bus 601 as shown on top of Figure 6. The compressed frame buffer data is transferred between storage devices 680 and a compressor/decompressor 600 through a 16-bit wide bus 681.

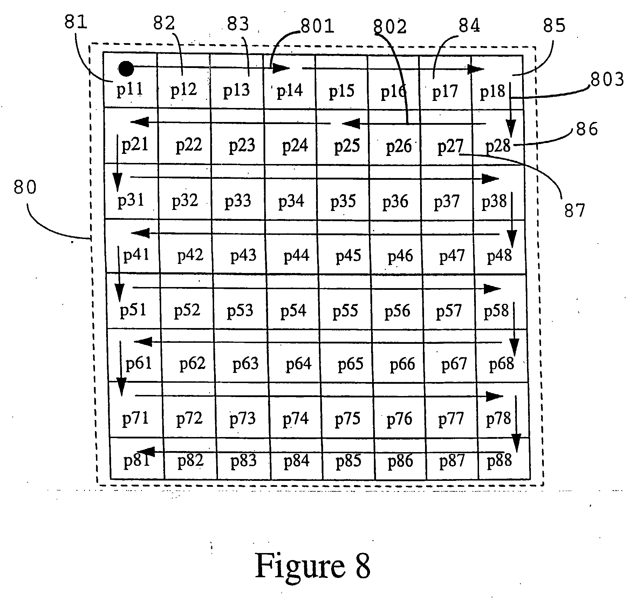

An in/out pixel buffer 61 which has a depth of 16X16 storage elements - corresponding to one MPEG macroblock -, provides a global read/write port for block transfer operations. A pixel adder/subtractor circuit 64 subtracts the current pixel from the pixel stored in a pixel register 62 to obtain the difference value for the compression operation. For reconstructing a pixel, the pixel adder/subtractor circuit 64 adds the difference value recovered by a Huffman VLC codec. Within an 8x8 block of each macroblock, one chooses a pixel as reference or starting pixel. For simplicity, a fixed location is stored in the reference pixel register 62 as the reference for recovering a block of pels. The reference pixel register 62 is loaded with the reference pixel and the addition/subtraction is performed. During the adding/subtracting process, the register 62 is always loaded with the next pixel thus overwriting the previous one for minimizing the register size. This can be done, for example, by following the sequence shown in Figure 8: One starts with reference pixel p11 that will be overwritten by p12 and so on. There are different possibilities for this scanning of a block including a spiral-type one.

For saving area, the pixel adder/subtractor circuit 64 is implemented by a full adder with one input connected to the output of the reference/previous pixel register. The other input has a mux selecting positive or negative for the input to the pixel adder/subtractor. In the case of negative values, i.e. subtraction, the mux takes all converted input to the input of the pixel adder/subtractor with a coupled "1" in the first bit "carry-in" input node to make the pixel adder/subtractor function like a subtractor as the 2's complement equals to the 1's complement plus "1".

A block buffer 63 stores a block of 8x8 pels for compression/decompression operations with the help of an embedded small FIFO controller determining the data flow control. During the compression rate calculation in the Huffman VLC codec 661, the block buffer 63 is used as a temporary buffer to store the difference values of the pels and the adjacent pel information. Therefore, an internal pixel bus 631 is implemented to provide the output mux for the input to the adder/subtractor circuit 64, the run-length codec 660 or the Huffman VLC codec 661. For saving area, the block buffer 63 may be implemented by DRAM or standard SRAM cells with a synchronized clock controlling the in/out of the pixel data flow.

The run-length codec circuit 660 is used to calculate the amount of zeroes and pack them with the following non-zero number to a run-length pair. The difference value of adjacent pels from the pixel adder/subtractor 64 is fed to the run-length codec 660 and then to the Huffman VLC codec 661. The Huffman VLC codec 661 converts the more frequently occurring symbols to short codes and improbable symbols to longer codes. In the case of very little change of the pixel information within a block, the sequence of difference values will contain long runs of zeroes. Therefore, the run-length codec 660 together with the Huffman VLC codec 661 will achieve high compression rates. The Huffman VLC codec 661 measures the block compression rate by counting the bit numbers and thus determines the number of zeroes in the sequence of difference values of each block. If the pel information is changing a lot, the run-length codec 660 does not have advantage of getting higher compression and could even result in a deterioration of the compression. In this case, the run-length coding will be skipped. The difference values between adjacent pels are temporarily stored in the pixel block buffer 63 and are sent directly to the Huffman VLC codec 661 through the intemal bus 631.

A frame buffer controller 682 controls the data flow in/out of the compressed frame buffer 680. It initiates the read/write operation and accesses the frame buffer as well as preventing frame buffer underflow/overflow situations. The frame buffer controller 682 receives the frame buffer address from a block starting address generator 67 and buffers the data in/out between the Huffman VLC codec 661 and the compressed frame buffer 680.

The compression/decompression circuit 600 may contain two macroblock buffers 692, 693, each composed of four 8x8 blocks of pels. They serve for the storage of the future and the past picture for the operations of motion estimation and motion predictive compensation. In this case, the compression/decompression circuit 600 can be loaded with a new bitstream for compression during the reconstruction of other blocks. In addition, there may also be two temporary 8x8 block buffers 690, 691 for quick data updating, especially, for shifting an entire macroblock left/right or up/down to find the best macroblock match for motion estimation. In the case of left/right or up/down shifting, there is only a need for updating a vertical or a horizontal line in the macroblock buffer 692 or 693. For saving area, the macroblocks 692, 693 and the temporary block buffers 690, 691 may be implemented by a DRAM or a standard SRAM circuit with a synchronized clock controlling the in/out of the pixel data flow.

The block starting address generator circuit 67 decodes the incoming address of the uncompressed frame buffer and points it to the right location of the compressed frame. The fixed length bit number of the uncompressed 8x8 block of pels will become variable and no longer fixed. The change of code length stems from the Huffman variable length coding, the VLC. There are some storage devices inside the block starting address generator circuit 67 saving the starting address of each 8x8 block of pels. The block starting address generator circuit 67 also interfaces with the frame buffer controller which counts the code length of each 8x8 block of pels and sends the starting address of the compressed frame buffer to the block starting address generator circuit 67 where they are kept inside block starting address storage devices.

A control state machine 65 controls the data flow and orchestrates the mechanism of the pipelining operation of the entire frame buffer compressor/decompressor. There are some state machines embedded locally in each circuit inside the frame buffer compressor/decompressor 600. The control state machine 65 is the global data flow and pipelining controller for the entire frame buffer compressor/decompressor 600. Since a compressed frame may have a variable code length, the bitstream can be totally different from the initial MPEG 8x8 block coding style.

If the video encoder or decoder 60 already contains block buffers, they can be waived which means they can be shared with the video encoder or decoder. On the other hand, by including block buffers into the compression/decompression circuit 600, there is no need to implement them into the video encoder or decoder 60 as well.

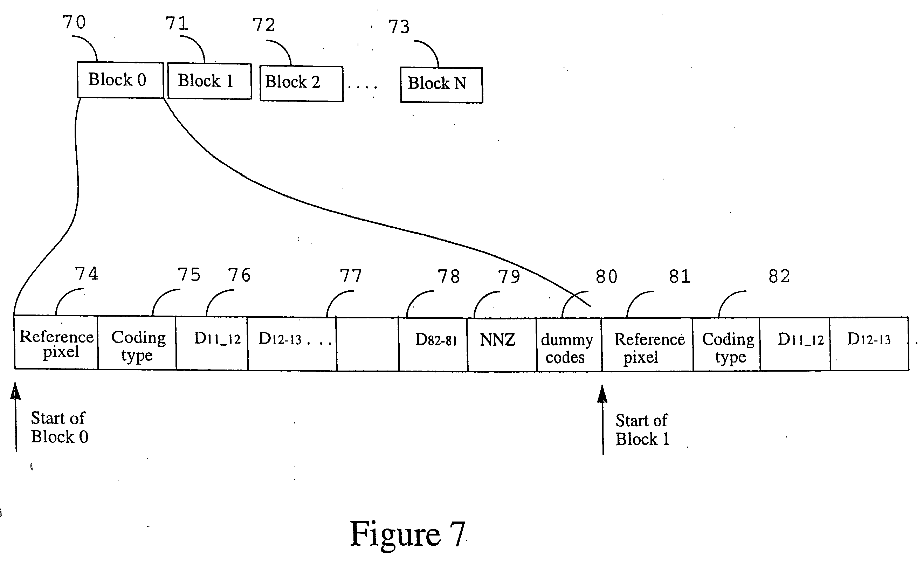

Figure 7 shows an example of a newly arranged bitstream of a compressed block of pels. Original block bitstreams 70 - 73 are packed in a fixed length code and are changed to a new bitstream with each block starting with an 8-bit reference pixel 74 (81 in block 1) followed by a 1-bit coding type indicator 75 (82 in block 1). A coding type bit = 1 may stand for a compression run through the run-length codec, while a coding type bit = 0 may indicate that the compression does not include the step of run-length coding. With the coding type bit decoded, the frame buffer compression/decompression circuit will have sufficient information to reconstruct the pixels within an 8x8 block of pels. The adaptively compressed data 76 - 78 of the 8x8 block of pels follow right after the coding type bit 75. The compressed pixel data will be ended with a short code called "No-Non-Zero" (NNZ) if no more non-zero difference values follow in the block. The NNZ symbol codes all of the trailing zero difference values with a shorter code word because it is believed that the zero value is most frequently occurring in the 8x8 blocks of pels. The new bitstream may further contain a dummy code 80 filled in the end of the bitstream for aligning the bitstream on the same eight-bit boundary. This guarantees that each block of pels of the compressed frame buffer always starts from the first bit of a sixteen-bit word boundary which is more convenient for pixel data accessing.

Figure 8 is an example illustrating how to obtain the difference values between adjacent pels within a block. The reference pel and the following difference values are sent to the Huffman VLC codec for entropy coding. In this figure, the pixel p11, 81, is selected as the reference pixel of an 8x8 block of pels. The arrows 801, 802, 803 etc. indicate the sequence of taking difference values between adjacent pixels. Calculating the difference value between p11 and p12 and applying the Huffman VLC and possibly the run-length coding will result in D11_12, 76. In the same way, one obtains D12_13, 77, etc. as shown in Figure 7. Thus, a fixed length pel value resp. fixed length difference value is converted to a variable length code Dij_mn.

For each 8x8 block one can choose a different pixel as reference/starting pixel. However, to simplify the coding/decoding process it is advantageous to take a fixed location for all blocks of the entire design. There are also different possibilities for scanning a block line by line or row by row. One could even start from a pixel close to the center of a block and take the difference values between adjacent pixels along a spiral-type sequence.

A Huffman coding table is used to code the symbols representing the pixels, the run-length pairs or the difference values of adjacent pixels. In a preferred embodiment, only a first predetermined number of symbols with a high probability of occurrence, for example only "NNZ", 0, ± 1, ±2 and ±3, are coded with a variable length code. A second predetermined number of the remaining symbols (including all remaining symbols or none of them) is coded directly with fixed length codes. The rest of the symbols is not encoded to reduce the overhead.

**Table 1:**

| A Huffman table for VLC coding. |
|---|
| 0x |
| 10XX |
| 110XX |
| 1110XXX |

Table 1 shows an example of a Huffman table for the entropy coding that the VLC codec encodes and decodes. Each code consists of a run-in sequence followed by a certain number of bits symbolized by X. The number of X-bits can be changed according to the statistical distribution of the difference value's frequency of occurrence.

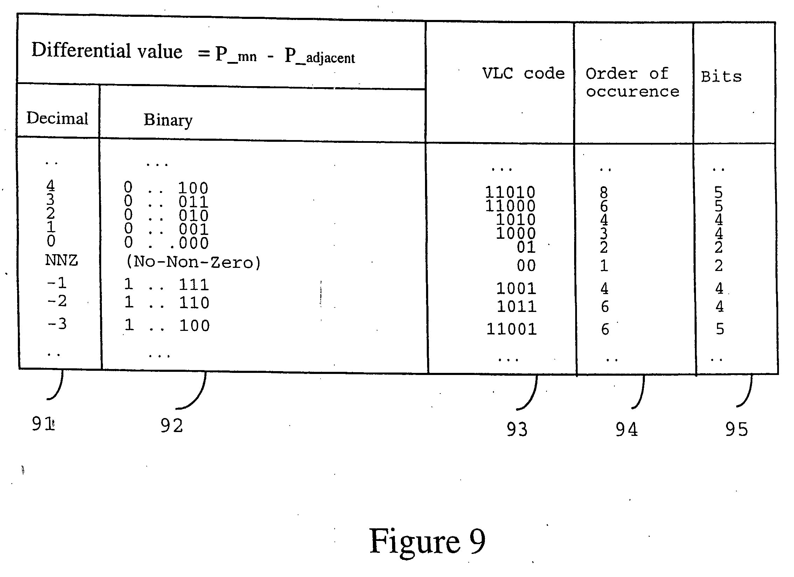

Figure 9 shows an example of a variable length coding of difference values derived from table 1 without run-length coding. Column 91 lists the NNZ code and some difference values of adjacent pixels in decimal representation, while column 92 contains their binary expression. Column 93 contains VLC codes with code lengths corresponding to the order of occurrence as shown in 94. In a similar way one can encode the difference values after a run-length coding. Within blocks with little change of pixel information, runs of zeroes occur quite frequently yielding a higher compression rate.

## Claims

1. A method for encoding or decoding video data using reference frames **characterized in that** said reference frames are split into one or more blocks of pixels that are at least partly compressed before storage and again decompressed before use as reference.

2. The method of claim 1, wherein said blocks are (at least partly) compressed and decompressed using the difference between the values of adjacent pixels within a block starting from a predetermined reference pixel.

3. The method of claim 2, wherein said blocks are scanned line by line, row by row or along a spiral-type sequence to obtain said difference values of adjacent pixels.

4. The method of claim 2 or 3, wherein said at least partial compressing produces a bitstream for each block comprising:
a code representing said reference pixel,
a code indicating what kind of compression method was used,
a code representing said difference of adjacent pixel values up to the last non-zero difference value, and
a code indicating the last non-zero difference value of the block.

5. The method of claim 4, wherein said bitstream further comprises a dummy code filling up said bitstream to a predetermined bit length.

6. The method of one of the preceding claims, wherein said at least partial compression is performed using entropy coding.

7. The method of claim 6, wherein a first predetermined number of symbols is coded using a variable length Huffman or Huffman-like coding.

8. The method of claim 6 or 7, wherein a second predetermined number of symbols is coded using a fixed length Huffman coding.

9. The method of one of the claims 6 - 8, wherein said entropy coding comprises a run-length coding.

10. The method of claim 9, wherein during said entropy coding for each block it is decided whether to use or not said run-length coding.

11. A video encoding or decoding system comprising:
a video encoder or decoder,
a frame buffer compression/decompression circuit, and
a frame buffer for compressed frames,
wherein said frame buffer compression/decompression circuit is coupled between said video encoder or decoder and said frame buffer.

12. The video encoding or decoding system of claim 11, wherein said frame buffer compression/decompression circuit comprises:
an in/out buffer,
an entropy codec circuit,
a frame buffer controller,
a block starting address generator, and
a control state machine.

13. The video encoding or decoding system of claim 12, further comprising a buffer connected between said in/out buffer and said entropy codec circuit.

14. The video encoding or decoding system of claim 12 or 13, wherein said entropy codec circuit comprises a Huffman or Huffman-like variable length codec circuit

15. The video encoding or decoding system of one of the claims 12 - 14, wherein said entropy codec circuit comprises a run-length codec circuit.

16. The video encoding or decoding system of claim 15, wherein said entropy codec circuit comprises a compression rate calculator determining whether to use or not said run-length coding.

17. The video encoding or decoding system of one of the claims 12 - 16, wherein said entropy codec circuit comprises:
a pixel register and
an adder/subtractor circuit.

18. The video encoding or decoding system of claim 17, wherein said adder/subtractor is a full adder coupled with converting logic gates to also function as a subtractor.

19. The video encoding or decoding system of one of the claims 12 - 18, wherein said frame buffer compression/decompression circuit comprises at least one further buffer for storing recovered pels.

20. The video encoding or decoding system of one of the claims 12 - 19, wherein at least one of said buffers is shared with said video encoder or decoder.

21. The video encoding or decoding system of one of the claims 12 - 20, wherein at least one of said buffers comprises DRAM or SRAM memory cells.

22. The video encoding or decoding system of one of the claims 11 - 21, wherein said system is implemented as a system-on-a-chip.

23. The video encoding or decoding system of claim 22, wherein said system-on-a-chip is implemented by using a DRAM process and said buffers are implemented by using DRAM memory cells.

24. The video encoding or decoding system of claim 22, wherein said system-on-a-chip is implemented by using an SRAM circuit and said buffers are implemented by using SRAM memory cells.
